# EUROPÄISCHE PATENTSCHRIFT

(11) **EP 1 613 497 B1**
(45) Veröffentlichungstag und Bekanntmachung des Hinweises auf die Patenterteilung: **10.10.2007**
(21) Anmeldenummer: 04721507.4
(22) Anmeldetag: 18.03.2004
(51) Int. Cl.: B60J 10/04, B60J 10/00

(54) **DICHTUNGSANORDNUNG ZUM ABDICHTEN UND FÜHREN EINER BEWEGBAREN FENSTERSCHEIBE, INSBESONDERE EINES KRAFTFAHRZEUGS**
SEALING ARRANGEMENT FOR SEALING AND GUIDING A MOBILE WINDOW PANE, ESPECIALLY PERTAINING TO A MOTOR VEHICLE
ENSEMBLE D'ETANCHEITE DESTINE A ASSURER L'ETANCHEITE ET LE GUIDAGE D'UNE VITRE DE FENETRE MOBILE, EN PARTICULIER D'UN VEHICULE AUTOMOBILE

(30) Priorität: 26.03.2003 DE 10313601
(43) Veröffentlichungstag der Anmeldung: 11.01.2006
(73) Patentinhaber: Metzeler Automotive Profile Systems GmbH, 88131 Lindau/Bodensee (DE)
(72) Erfinder: MUGA, Felix, E-26002 Logrono (ES); KRAUSE, Fritz, 88145 Hergatz (DE)
(74) Vertreter: Schober, Christoph D.
(86) Internationale Anmeldenummer: PCT/EP2004/002836
(87) Internationale Veröffentlichungsnummer: WO 2004/085184

(56) Entgegenhaltungen:
- EP-A- 0 155 641
- EP-A- 0 421 316
- EP-A- 0 836 961
- DE-A- 2 409 487
- DE-U- 8 232 893
- DE-U- 8 908 394
- GB-A- 2 178 463

## Beschreibung

Die Erfindung betrifft eine Dichtungsanordnung zum Abdichten und Führen einer bewegbaren Fensterscheibe, insbesondere eines Kraftfahrzeugs. Die Dichtungsanordnung weist eine Dichtung auf, die einteilig aus einem elastisch verformbaren Werkstoff mit einem annähernd U-förmigen Querschnitt gefertigt ist. Zudem ist die Dichtungsanordnung mit einer die Fensterscheibe einfassenden Einfassung versehen, an der die Dichtung befestigbar ist. Die Einfassung weist einen inneren Flansch und einen von dem inneren Flansch beabstandeten äußeren Flansch auf, die zumindest einen Schachtabschnitt zum Versenken der Fensterscheibe und einen ersten Führungsabschnitt zum Führen der Fensterscheibe bilden. Die Dichtung weist einen an dem inneren Flansch befestigbaren inneren Schenkelabschnitt, einen an dem äußeren Flansch befestigbaren äußeren Schenkelabschnitt und außerhalb des Schachtabschnitts einen Basisabschnitt auf. Der Basisabschnitt, der innere Schenkelabschnitt und der äußere Schenkelabschnitt sind jeweils mit einem die Fensterscheibe abdichtenden und/oder führenden Dichtelement versehen.

Eine Dichtungsanordnung zum Abdichten und Führen einer bewegbaren Fensterscheibe wird in der EP 0 155 641 B1 beschrieben. Die bekannte Dichtungsanordnung weist eine aus einem elastomeren Werkstoff bestehende Dichtung auf, die an einem die Fensterscheibe einfassenden Rahmen befestigt ist. Die Dichtung setzt sich aus mehreren, separat gefertigten Dichtungsabschnitten zusammen, die durch Kleben oder Vulkanisieren zu einem Dichtungsrahmen miteinander verbunden sind. Die separate Fertigung der einzelnen Dichtungsabschnitte ermöglicht zwar eine funktionsgerechte Ausgestaltung des Dichtungsrahmens, die an die unterschiedlichen Anforderungen an die Dichtung in einzelnen Funktionsbereichen, beispielsweise im Bereich eines die Fensterscheibe aufnehmenden Fensterschachts oder einer die Fensterscheibe seitlich führenden Fensterführung, angepasst ist. Als nachteilig hat sich aber der mit der separaten Fertigung der einzelnen Dichtungsabschnitte verbundene Aufwand erwiesen, der mit verhältnismässig hohen Herstellungskosten einhergeht. Entsprechendes gilt für eine aus der EP 0 872 369 A1 bekannte Dichtungsanordnung für die Fensterscheibe eines Kurbelfensters, die sich aus einem äusseren Dichtungsprofil und einem inneren Dichtungsprofil zusammensetzt. Das äussere Dichtungsprofil und das innere Dichtungsprofil sind mit als Hohlkammern ausgebildeten Dichtelementen versehen, die an der Seitenfläche der Fensterscheibe anliegen. Das äussere Dichtungsprofil ist als geschlossener Ring ausgebildet, wohingegen das innere Dichtungsprofil im Bereich eines Fensterschachts durch ein separates Dichtungsprofil ersetzt wird.

Demgegenüber offenbaren die EP 0 282 919 B1 und EP 0 704 597 A2 eine Dichtungsanordnung, die eine Dichtung aufweist, die einteilig aus einem elastomeren Werkstoff extrudiert ist. Die Dichtung ist im Querschnitt annähernd U-förmig und verfügt über einen Basisabschnitt, einen an einem inneren Flansch einer die Fensterscheibe einfassenden Einfassung befestigten inneren Schenkelabschnitt und einen an einem äusseren Flansch der Einfassung befestigten äusseren Schenkelabschnitt. Der Basisabschnitt ist im Bereich eines die Fensterscheibe aufnehmenden Fensterschachts entfernt, so dass die Schenkelabschnitte eine innere und eine äussere Fensterschachtdichtung bilden. Darüber hinaus sind der Basisabschnitt und die Schenkelabschnitte jeweils mit einem die Fensterscheibe abdichtenden und/oder führenden Dichtelement versehen. Die aus der EP 0 282 919 B1 bekannte Dichtung weist Dichtelemente auf, die allesamt als Dichtlippen ausgebildet sind.

Die aus der EP 0 704 597 A2 bekannte Dichtung weist an dem Basisabschnitt und dem äußeren Schenkelabschnitt ebenfalls als Dichtlippen ausgebildete Dichtelemente auf, ist an dem inneren Schenkelabschnitt hingegen mit einem als Hohlkammer ausgebildeten Dichtelement versehen. Als nachteilig bei beiden Ausgestaltungen hat sich ein in Hinsicht auf die unterschiedlichen Anforderungen an die Dichtung in den einzelnen Funktionsbereichen unbefriedigendes Dichtungs- und Führungsverhalten der Dichtelemente erwiesen.

Die DE 89 08 394 U1 offenbart eine Dichtungsanordnung zum Abdichten und Führen einer bewegbaren Fensterscheibe, insbesondere eines Kraftfahrzeugs. Zwei Profilstreifen bilden eine Dichtung, die einteilig aus einem elastisch verformbaren Werkstoff gefertigt ist. Um die Fensteröffnung herumlaufende Flansche bilden eine die Fensterscheibe einfassende Einfassung, an der die Dichtung befestigbar ist. Die Einfassung weist einen inneren Flansch und einen von dem inneren Flansch beabstandeten äußeren Flansch auf, die einen Schachtabschnitt zum Versenken der Fensterscheibe und einen Führungsabschnitt zum Führen der Fensterscheibe bilden. Die Dichtung ist im Querschnitt annähernd U-förmig und weist einen an dem inneren Flansch befestigten inneren Schenkelabschnitt, einen an dem äußeren Flansch befestigten äußeren Schenkelabschnitt und außerhalb des Schachtabschnitts eine Wand als Basisabschnitt auf. Der innere und der äußere Schenkelabschnitt sind jeweils mit einem die Fensterscheibe abdichtenden Dichtelement versehen. Die Dichtelemente sind jeweils als Hohlkammer ausgebildet und mit einer an eine Seitenfläche der Fensterscheibe anlegbaren Kontaktfläche versehen.

Die DE 82 32 893 U1 offenbart ferner eine Dichtungsanordnung zum Abdichten und Führen einer bewegbaren Fensterscheibe, insbesondere eines Kraftfahrzeugs. Ein einstückiges Streifenprofil bildet eine Dichtung, die einteilig aus einem elastisch verformbaren Werkstoff gefertigt ist. Ein um eine Fensteröffnung herumlaufender Metallkanal bildet eine die Fensterscheibe einfassende Einfassung, an der das Streifenprofil befestigt ist. Der Metallkanal weist eine innere Platte und eine von der inneren Platte beabstandete äußere Platte auf, die einen Schachtabschnitt zum Versenken der Fensterscheibe und einen Führungsabschnitt zum Führen der Fensterscheibe bilden. Das Streifenprofil ist im eingebauten Zustand im Querschnitt annähernd U-förmig und weist einen an der inneren Platte befestigten inneren Schenkelabschnitt, einen an der äußeren Platte befestigten äußeren Schenkelabschnitt und außerhalb des Schachtabschnitts einen Basisabschnitt auf. Der Basisabschnitt, der innere Schenkelabschnitt und der äußere Schenkelabschnitt sind jeweils mit einem die Fensterscheibe abdichtenden Dichtelement versehen.,Das an dem inneren Schenkelabschnitt angeordnete Dichtelement und das an dem äußeren Schenkelabschnitt angeordnete Dichtelement sind jeweils als Hohlkammer ausgebildet und mit einer an eine Seitenfläche der Fensterscheibe anlegbaren Kontaktfläche versehen.

Der Erfindung liegt die **Aufgabe** zugrunde, eine Dichtungsanordnung der eingangs genannten Art dahingehend weiterzubilden, dass sich bei einer vergleichsweise kostengünstigen Fertigung eine den unterschiedlichen Anforderungen an die Dichtung in den einzelnen Funktionsbereichen genügende universelle Ausgestaltung erzielen lässt.

Zur **Lösung** dieser Aufgabe wird eine Dichtungsanordnung mit den Merkmalen gemäß Anspruch 1 vorgeschlagen.

Vorteilhafte Weiterbildungen der erfindungsgemässen Dichtungsanordnung stellen die Gegenstände der Ansprüche 2 bis 12 dar.

Die erfindungsgemäße Dichtungsanordnung beruht auf der Erkenntnis, dass die Ausgestaltung der an dem inneren Schenkelabschnitt und dem äußeren Schenkelabschnitt angeordneten Dichtelemente als Hohlkammer ein Einführen der Fensterscheibe zwischen dem inneren Schenkelabschnitt und dem äußeren Schenkelabschnitt in einander entgegen gesetzten Richtungen gestattet. Auf diese Weise ist es möglich, die Dichtung beispielsweise sowohl im Bereich eines die Fensterscheibe aufnehmenden Schachtabschnitts als auch im Bereich eines dem Schachtabschnitt gegenüberliegenden Aufnahmeabschnitts für die Oberkante der Fensterscheibe einzusetzen. Die Ausgestaltung des inneren Dichtelements und des äusseren Dichtelements als Hohlkammer gewährleistet zudem eine zuverlässige Führung der Fensterscheibe im Bereich von seitlichen Führungsabschnitten. Zu einer universellen Ausgestaltung der Dichtung, die gleichwohl die unterschiedlichen Anforderungen an die Dichtung in den einzelnen Funktionsbereichen berücksichtigt, tragen ferner die Kontaktflächen der Dichtelemente bei, die ein reversibles Bewegen der Fensterscheibe zwischen dem inneren Dichtelement und dem äusseren Dichtelement in zwei senkrecht zueinander verlaufenden Richtungen gewährleisten. Die auf einander zugewandten Seiten der beispielsweise durch asymmetrische Hohlkammern gebildeten Dichtelemente vorhandenen Kontaktflächen stellen sicher, dass die Fensterscheibe sowohl im Bereich der in der Regel vertikalen Führungsabschnitte als auch im Bereich des in der Regel horizontalen Schachtabschnitts und Aufnahmeabschnitts eine gezielte Führung und wirksame Abdichtung erfährt.

Der Basisabschnitt ist an dem mittleren Segment angeordnet, so dass sich eine exakte Positionierung der Dichtung an der Einfassung ergibt.

Im Bereich des Schachtabschnitts ist die Einfassung frei von dem mittleren Segment und ist die Dichtung frei von dem Basisabschnitt. Denn auf diese Weise lässt sich die Fensterscheibe zwischen dem eine innere Fensterschachtdichtung bildenden inneren Schenkelabschnitt und dem eine äussere Fensterschachtdichtung bildenden äusseren Schenkelabschnitt in einen die Fensterscheibe aufnehmenden Fensterschacht versenken.

In dem zweiten Führungsabschnitt ist das mittlere Segment von dem inneren Flansch und dem äusseren Flansch getrennt, und der Basisabschnitt ist von dem inneren Schenkelabschnitt und dem äusseren Schenkelabschnitt getrennt. Der beispielsweise eine Seitenkante der Fensterscheibe führende zweite Führungsabschnitt unterscheidet sich von dem Schachtabschnitt dadurch, dass das mittlere Segment der Einfassung und der Basisabschnitt der Dichtung nicht gänzlich entfernt sind, sondern in einem vorgegebenen Abstand von dem inneren Flansch und dem äusseren Flansch beziehungsweise dem inneren Schenkelabschnitt und dem äusseren Schenkelabschnitt angeordnet sind. Diese Anordnung ermöglicht eine funktionelle Trennung zwischen der seitlichen Führung der Fensterscheibe durch den Basisabschnitt und das mittlere Segment einerseits und einer zuverlässigen Abdichtung der Fensterscheibe durch den an dem inneren Flansch befestigten inneren Schenkelabschnitt und den an dem äusseren Flansch befestigten äusseren Schenkelabschnitt andererseits. Auf Grund der funktionellen Trennung ergeben sich vielfältige Gestaltungsmöglichkeiten für das optische Erscheinungsbild der Fensterscheibe, die sich von dem herkömmlichen Design, beispielsweise eines Kraftfahrzeugs abheben.

Von Vorteil ist es, ein an dem Basisabschnitt angeordnetes zentrales Dichtelement als Hohlkammer auszubilden und mit einer an einer Stirnfläche der Fensterscheibe anlegbaren Kontaktfläche zu versehen. Die Ausgestaltung des zentralen Dichtelements als Hohlkammer gewährleistet zum einen eine zuverlässige Führung der seitlichen Stirnflächen der Fensterscheibe im Bereich der Führungsabschnitte und zum anderen ein praxisgerechtes Widerlager für die obere Stirnfläche der Fensterscheibe im Bereich eines die Oberkante der Fensterscheibe aufnehmenden Aufnahmeabschnitts.

Von Vorteil ist ferner, wenn zumindest eine der Kontaktflächen mit einer reibungsvermindernden Beflockung versehen ist, um störende Reibgeräusche zu verhindern.

In einer bevorzugten Ausgestaltung der erfindungsgemässen Dichtungsanordnung ist der innere Schenkelabschnitt mit einer kanalförmigen Aussparung versehen, in die der innere Flansch formschlüssig und/oder kraftschlüssig eingreift, um die Dichtung sicher an der Einfassung zu befestigen. Alternativ oder zusätzlich kann zu diesem Zweck auch der äussere Schenkelabschnitt mit einer kanalförmigen Aussparung versehen sein, in die der äussere Flansch formschlüssig und/oder kraftschlüssig eingreift. In Hinsicht auf eine dauerhafte Befestigung der Dichtung an der Einfassung ist es zweckmässig, Haltelippen vorzusehen, die in der Aussparung angeordnet sind.

Bevorzugt weist die erfindungsgemässe Dichtungsanordnung einen Verstärkungsträger auf, durch den der innere Schenkelabschnitt und/oder der äussere Schenkelabschnitt armiert werden. Der Verstärkungsträger ist vorzugsweise aus einem metallischen Werkstoff gefertigt und im Querschnitt annähernd U-förmig ausgestaltet. Überdies ist der Verstärkungsträger zweckmässigerweise mit einer Vielzahl an Öffnungen versehen, die dem Verstärkungsträger eine ausreichende Verformungsfähigkeit verleihen, um die Dichtung in einem Stück entlang der unterschiedlichen Funktionsbereiche der Einfassung anzuordnen.

In Hinsicht auf eine einfache und kostengünstige Fertigung ist die Dichtung zweckmässigerweise aus einem elastomeren Werkstoff, vorzugsweise einem thermoplastischen Elastomer (TPE) oder Ethylen-Propylen-Dien-Kautschuk (EPDM), extrudiert.

Um zu verhindern, dass bei einer extrudierten Dichtung der sogenannte "Hungry Horse"-Effekt auftritt, der sich in einer im wesentlichen gerippten Kontur der Oberfläche der Dichtung zeigt und auf die Öffnungen eines in der Dichtung eingebetteten Verstärkungsträgers zurückzuführen ist, sind der innere Schenkelabschnitt und/oder der äussere Schenkelabschnitt vorteilhafterweise mit einer den Verstärkungsträger zumindest teilweise verdeckenden Hohlkammer versehen, wobei vorzugsweise die Hohlkammer durch wenigstens einen Steg in mehrere Bereiche unterteilt ist. Das Vorsehen der Hohlkammer hat zur Folge, dass der "Hungry Horse"-Effekt allenfalls auf einer Innenwandung der Hohlkammer auftritt und somit die dem Betrachter zugewandte Oberfläche der Dichtung in ästhetischer Hinsicht unbeeinträchtigt bleibt. Der die Hohlkammer in beispielsweise zwei Bereiche unterteilende Steg ist so dimensioniert, dass einerseits ein Zusammenfallen der Hohlkammer während der Extrusion der Dichtung wirksam verhindert wird und andererseits der sich möglicherweise auf einer Innenwandung der Hohlkammer zeigende "Hungry Horse"-Effekt nicht auf die Oberfläche der Dichtung übertragen wird.

In einer bevorzugten Ausgestaltung der erfindungsgemässen Dichtungsanordnung verbindet das mittlere Segment den inneren Flansch und den äusseren Flansch im Bereich eines die Oberkante der Fensterscheibe aufnehmenden Aufnahmeabschnitts miteinander, wobei vorzugsweise das mittlere Segment im Querschnitt annähernd U-förmig ist. Das den inneren Flansch mit dem äusseren Flansch verbindende mittlere Segment verleiht der Einfassung im Bereich des ersten Führungsabschnitts und/oder des Aufnahmeabschnitts eine im wesentlichen kanalförmige Ausgestaltung, welche die Stirnfläche und den Randbereich der Seitenflächen der Fensterscheibe umschliesst.

So hat es sich in diesem Zusammenhang als vorteilhaft erwiesen, den zwischen dem mittleren Segment und dem inneren Flansch und dem äusseren Flansch vorhandenen Abstand derart auszugestalten, dass sich dieser entlang des zweiten Führungsabschnitts kontinuierlich vergrössert. Der Abstand kann zum Beispiel zwischen dem Aufnahmeabschnitt und dem Schachtabschnitt sich konisch erweiternd oder hyperbelförmig verlaufend ausgestaltet sein.

Einzelheiten und weitere Vorteile der erfindungsgemässen Dichtungsanordnung ergeben sich aus der nachfolgenden Beschreibung eines bevorzugten Ausführungsbeispiels. In den das Ausführungsbeispiel lediglich schematisch darstellenden Zeichnungen veranschaulichen im einzelnen:
- Fig. 1: eine Seitenansicht der Tür eines Kraftfahrzeugs;
- Fig. 2: einen Schnitt gemäss der Linie II-II in Fig. 1;
- Fig. 3: einen Schnitt gemäss der Linie III-III in Fig. 1;
- Fig. 4: einen Schnitt gemäss der Linie IV-IV in Fig. 1;
- Fig. 5: einen Schnitt gemäss der Linie V-V in Fig. 1;
- Fig. 6: einen Schnitt gemäss der Linie VI-VI in Fig. 1;
- Fig. 7: einen Schnitt gemäss der Linie VII-VII in Fig. 1;
- Fig. 8: einen Schnitt gemäss der Linie VIII-VIII in Fig. 1;
- Fig. 9: einen Schnitt gemäss der Linie IX-IX in Fig. 1;
- Fig. 10: einen Schnitt gemäss der Linie X-X in Fig. 1 und
- Fig. 11: einen Querschnitt durch die erfindungsgemässe Dichtungsanordnung.

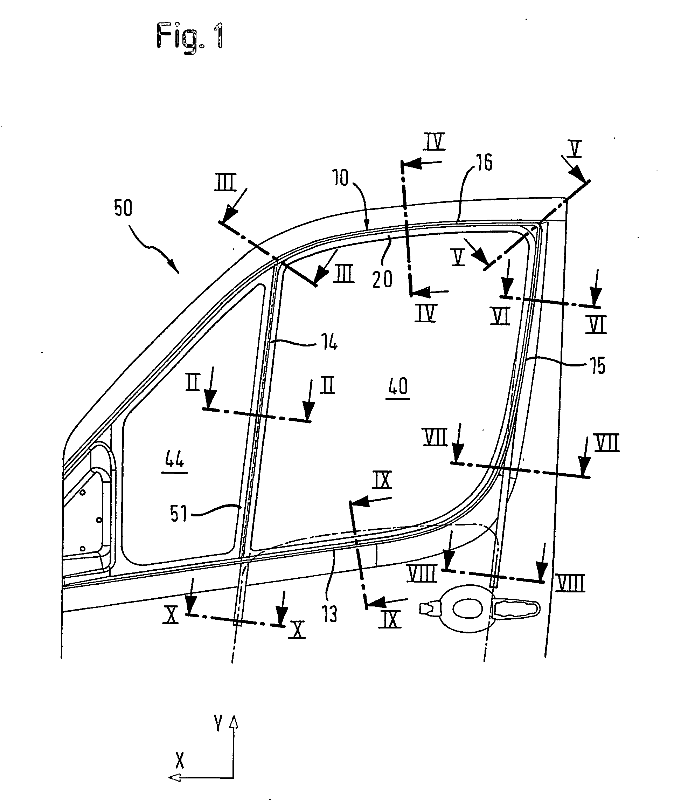

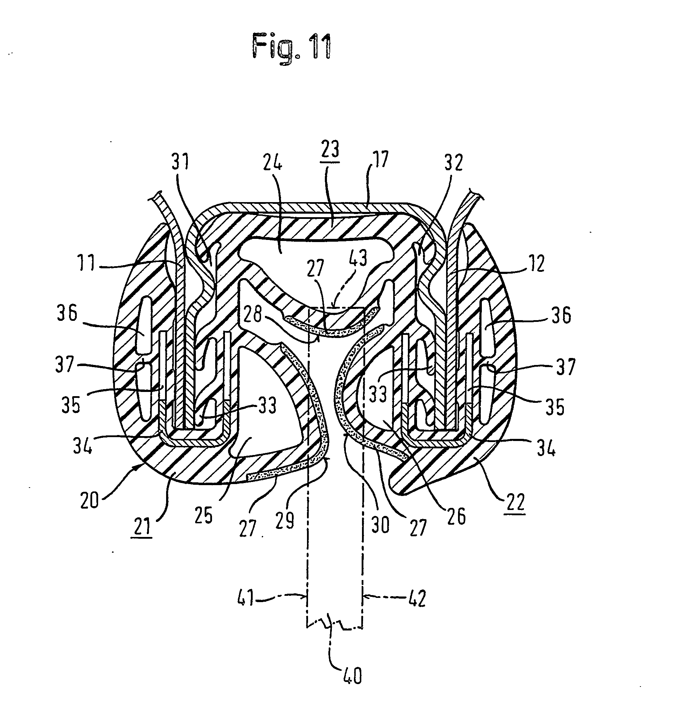

Die in Fig. 1 gezeigte Tür 50 eines Kraftfahrzeugs weist eine in vertikaler Richtung y bewegbare Fensterscheibe 40 und eine feststehende Fensterscheibe 44 auf. Die Fensterscheibe 40 ist in einen nicht näher gezeigten Fensterschacht der Tür 50 versenkbar und wird von einer durch die Tür 50 gebildeten Einfassung 10 eingefasst. Die Einfassung 10 weist einen dem Innenraum des Kraftfahrzeugs zugewandten inneren Flansch 11 und einen von dem inneren Flansch 11 beabstandeten äusseren Flansch 12 auf. Der innere Flansch 11 und der äussere Flansch 12 bilden einen Schachtabschnitt 13 im Bereich des die Fensterscheibe aufnehmenden Fensterschachts, einen ersten Führungsabschnitt 14, der die der feststehenden Fensterscheibe 44 zugewandte Seitenkante der Fensterscheibe 40 im Bereich der A-Säule des Kraftfahrzeugs führt, einen zweiten Führungsabschnitt 15, der die der festestehenden Fensterscheibe 44 abgewandte Seitenkante der Fensterscheibe 40 im Bereich der B-Säule des Kraftfahrzeugs führt, und einen Aufnahmeabschnitt 16, der die Oberkante der Fensterscheibe 40 aufnimmt. Wie insbesondere aus Fig. 11 ersichtlich ist, weist die Einfassung 10 überdies abschnittsweise ein mittleres Segment 17 auf, das den inneren Flansch 11 und den äusseren Flansch 12 miteinander verbindet. Das mittlere Segment 17 ist zu diesem Zweck im Querschnitt annähernd U-förmig ausgestaltet, wobei die Schenkel des mittleren Segments 17 einen Teil des inneren Flanschs 11 und des äusseren Flanschs 12 bilden.

Aus Fig. 11 ist ferner ersichtlich, dass eine die Fensterscheibe 40 abdichtende und führende Dichtung 20 an der Einfassung 10 befestigt ist. Die im Querschnitt annähernd U-förmige Dichtung 20 ist einteilig aus beispielsweise EPDM extrudiert und weist einen an dem inneren Flansch 11 befestigten inneren Schenkelabschnitt 21 und einen an dem äusseren Flansch 12 befestigten äusseren Schenkelabschnitt 22 auf. Darüber hinaus ist die Dichtung 20 abschnittsweise mit einem Basisabschnitt 23 versehen, der an dem mittleren Segment 17 angeordnet ist und den inneren Schenkelabschnitt 21 mit dem äusseren Schenkelabschnitt 22 verbindet. Zum Befestigen der Dichtung 20 an der Einfassung 10 sind der innere Schenkelabschnitt 21 und der äussere Schenkelabschnitt 22 jeweils mit einer kanalförmigen Aussparung 31, 32 versehen. Die Aussparung 31 ist auf den inneren Flansch 11 aufgesteckt, wohingegen die Aussparung 32 auf den äusseren Flansch 12 aufgesteckt ist. Um einen wirksamen Form- und Kraftschluss zwischen dem inneren Flansch 11 und der Aussparung 31 sowie dem äusseren Flansch 12 und der Aussparung 32 zu erreichen, sind in den Aussparungen 31, 32 zusätzlich Haltelippen 33 angeordnet.

Weiterhin sind der innere Schenkelabschnitt 21 und der äussere Schenkelabschnitt 22 jeweils durch einen im Querschnitt annähernd U-förmigen Verstärkungsträger 34 armiert, der die Aussparungen 31, 32 umschliesst. Die aus einem metallischen Werkstoff gefertigten Verstärkungsträger 34 weisen eine Vielzahl an Öffnungen 35 auf, die eine ausreichende Verformungsfähigkeit der Verstärkungsträger 34 sicherstellen. Um bei der Extrusion der Dichtung 20 das Auftreten des "Hungry Horse"-Effekts in Folge der Öffnungen 35 der Verstärkungsträger 34 an der Oberfläche der Dichtung 20 zu vermeiden, sind der innere Schenkelabschnitt 21 und der äussere Schenkelabschnitt 22 mit Hohlkammern 36 versehen, welche die Verstärkungsträger 34 teilweise verdecken und durch einen Steg 37 in zwei Bereiche unterteilt sind. Der Steg 37 gewährleistet, dass die Hohlkammern 36 bei der Extrusion der Dichtung 20 erhalten bleiben.

Fig. 11 gibt ferner zu erkennen, dass der Basisabschnitt 23, der innere Schenkelabschnitt 21 und der äussere Schenkelabschnitt 22 jeweils mit einem die Fensterscheibe 40 abdichtenden und führenden Dichtelement 24, 25, 26 versehen sind. Das an dem Basisabschnitt 23 angeordnete zentrale Dichtelement 24 ist als Hohlkammer ausgebildet und mit einer an der Stirnfläche 43 der Fensterscheibe 40 anliegenden Kontaktfläche 28 versehen. Das an dem inneren Schenkelabschnitt 21 angeordnete innere Dichtelement 25 und das an dem äusseren Schenkelabschnitt 22 angeordnete äussere Dichtelement 26 sind ebenfalls als Hohlkammern ausgebildet und mit Kontaktflächen 29, 30 versehen, die an den Seitenflächen 41, 42 der Fensterscheibe 40 anliegen. Sämtliche der Kontaktflächen 28, 29, 30 sind mit einer reibungsvermindernden Beflockung 27 versehen, die das Auftreten unerwünschter Reibgeräusche beim Bewegen der Fensterscheibe 40 vermeidet oder zumindest reduziert.

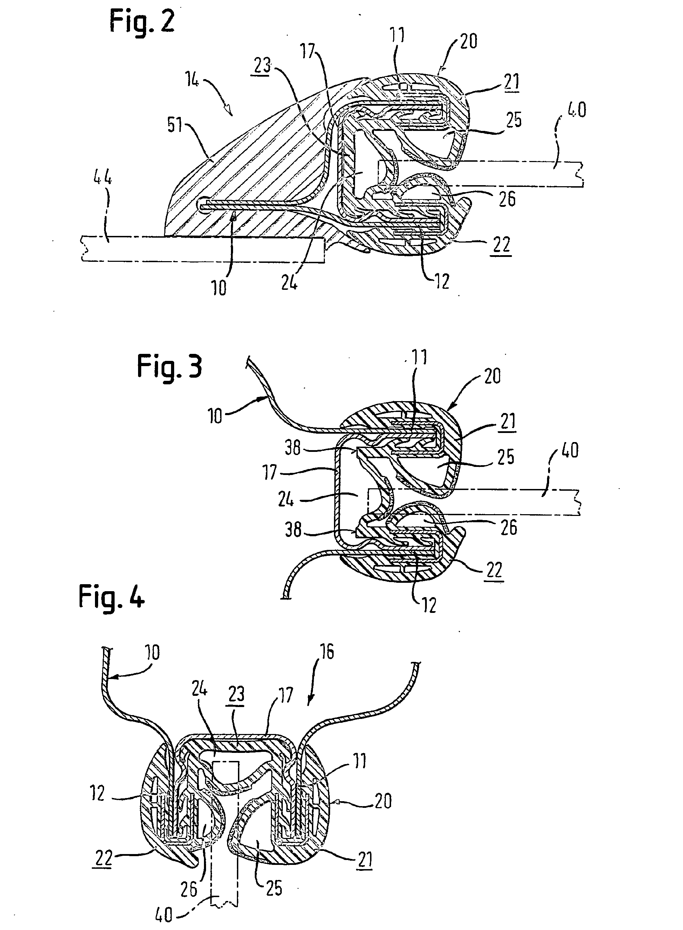

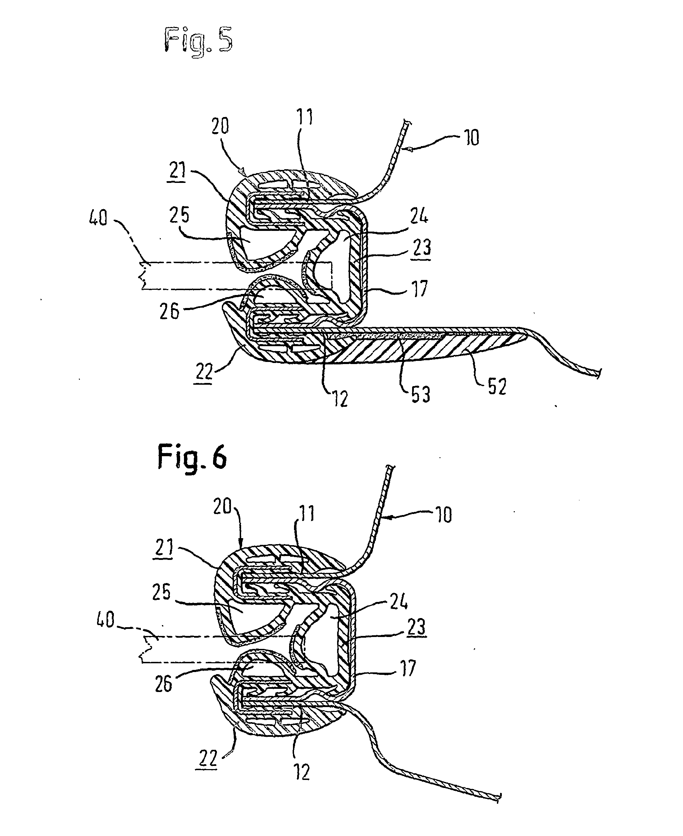

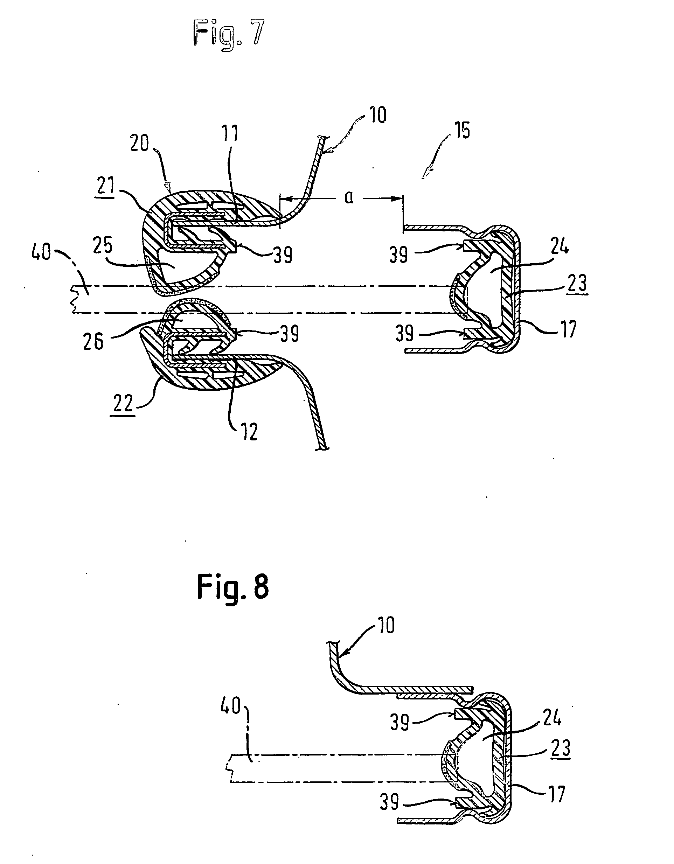

Wie die Fig. 2 bis 10 zu erkennen geben, ist die Dichtung 20 in einem Stück entlang der Einfassung 10 angeordnet. Die Einfassung 10 weist im Bereich des ersten Führungsabschnitts 14 das mittlere Segment 17 auf, das den inneren Flansch 11 mit dem äusseren Flansch 12 verbindet und an dem der Basisabschnitt 23 angeordnet ist, wie insbesondere aus den Fig. 2, 3 und 10 ersichtlich ist. An der Einfassung 10 ist im Bereich des Führungsabschnitts 14 zudem eine Dichtung 51 angeordnet, welche die feststehende Fensterscheibe 44 abdichtet, wie Fig. 2 zu erkennen gibt. An der Übergangsstelle zwischen dem ersten Führungsabschnitt 14 und dem Aufnahmeabschnitt 16 ist ein Teil des Basisabschnitts 23 entlang von Schnittflächen 38 entfernt, um eine Biegung der Dichtung 20 zu ermöglichen, wie aus Fig. 3 ersichtlich ist. Die Einfassung 10 weist auch im Bereich des Aufnahmeabschnitts 16 das mittlere Segment auf, wie die Fig. 4 und 5 zu erkennen geben. Aus Fig. 5 ist zudem ersichtlich, dass im Übergangsbereich von dem Aufnahmeabschnitt zu dem zweiten Führungsabschnitt ein als Zwickel dienendes Formteil 52 mittels eines Klebebands 53 oder eines Befestigungsclips an der Einfassung 10 befestigt ist, um einen auf Grund der Biegung der Dichtung 20 in dem Übergangsbereich hervorgerufenen Freiraum zu kaschieren.

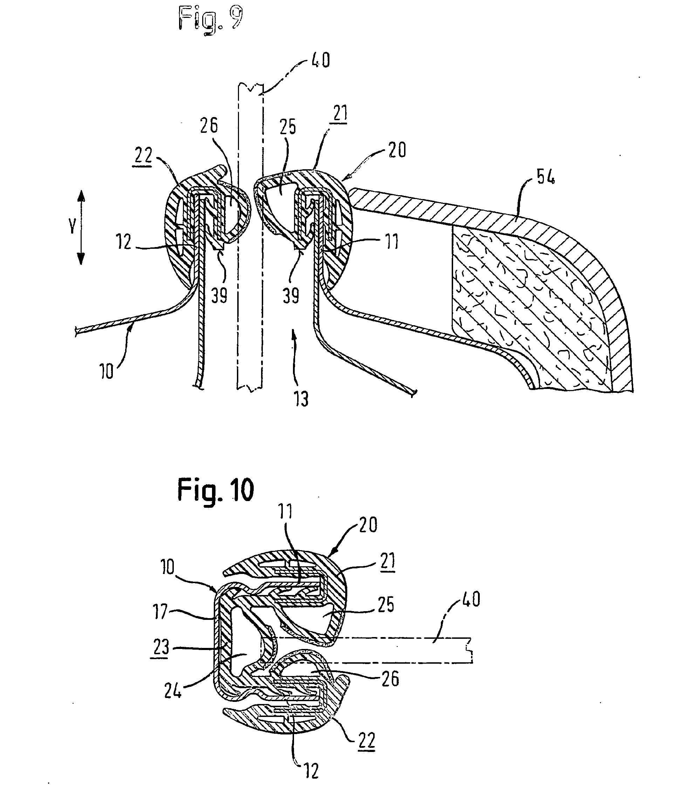

Das mittlere Segment 17 der Einfassung 10 ist im Bereich des zweiten Führungsabschnitts 15 in einem Abstand a von dem inneren Flansch 11 und dem äusseren Flansch 12 angeordnet. Der Abstand a verbreitert sich kontinuierlich in Richtung auf den Schachtabschnitt 13, wie insbesondere aus den Fig. 6 bis 8 ersichtlich ist. Der an dem mittleren Segment 17 angeordnete Basisabschnitt 23 ist entlang von Schnittflächen 39 von dem inneren Schenkelabschnitt 21 und dem äusseren Schenkelabschnitt 22 getrennt. Die von dem Basisabschnitt 23 separierten Schenkelabschnitte 21, 22 gehen kurvenförmig in den Schachtabschnitt 13 über, wohingegen sich das mittlere Segment 17 und der an diesem befestigte Basisabschnitt 23 nahezu senkrecht in den die Fensterscheibe 40 aufnehmenden Fensterschacht erstrecken. Im Bereich des Schachtabschnitts 13 weist demzufolge die Einfassung 10 kein mittleres Segment 17 und die Dichtung 20 keinen Basisabschnitt 23 auf mit der Folge, dass der auf dem inneren Flansch 11 geführte innere Schenkelabschnitt 21 eine an eine Innenverkleidung 54 der Tür 50 angrenzende innere Fensterschachtdichtung bildet und der auf dem äusseren Flansch 12 geführte äussere Schenkelabschnitt 22 eine äussere Fensterschachtdichtung bildet, wie aus Fig. 9 ersichtlich ist.

Die zuvor beschriebene Dichtungsanordnung zum Abdichten und Führen der bewegbaren Fensterscheibe 40 zeichnet sich durch eine vergleichsweise kostengünstige Fertigung aus. Grund hierfür ist die einteilig extrudierte Dichtung 20, die in einem Stück entlang der gesamten Einfassung 10 angeordnet ist. Die Dichtung 20 verfügt darüber hinaus über eine universelle Ausgestaltung, die den unterschiedlichen Anforderungen an die Dichtung 20 in den Funktionsbereichen Schachtabschnitt 13, erster Führungsabschnitt 14, zweiter Führungsabschnitt 15 und Aufnahmeabschnitt 16 Rechnung trägt. Dies ist in erster Linie auf die Ausgestaltung des inneren Dichtelements 25 und des äusseren Dichtelements 26 als asymmetrische Hohlkammern, zwischen denen die Fensterscheibe 40 bewegt wird, zurückzuführen. Die Dichtelemente 25, 26 weisen in Folge der Ausgestaltung als Hohlkammern an den Seitenflächen 41, 42 der Fensterscheibe 40 anliegende Kontaktflächen 29, 30 auf, die derart ausgestaltet sind, dass die Fensterscheibe 40 sowohl bei Anordnung der Dichtelemente 25, 26 in annähernd horizontaler Richtung x, wie im Bereich des Schachtabschnitts 13 und des Aufnahmeabschnitts 16, als auch bei Anordnung der Dichtelemente 25, 26 in annähernd vertikaler Richtung y, wie im Bereich des ersten Führungsabschnitts 14 und des zweiten Führungsabschnitts 15, reversibel zwischen dem inneren Dichtelement 25 und dem äusseren Dichtelement 26 bewegbar ist. Nicht zuletzt ermöglicht die oben beschriebene Dichtungsanordnung auf Grund des Auseinandergehens von dem Basisabschnitt 23 und den Schenkelabschnitten 21, 22 im Bereich des zweiten Führungsabschnitts 15 ein optisches Erscheinungsbild der Tür 50, die sich von dem Design herkömmlicher Fahrzeugtüren abhebt.

### Bezugszeichenliste

- 10: Einfassung
- 11: innerer Flansch
- 12: äusserer Flansch
- 13: Schachtabschnitt
- 14: erster Führungsabschnitt
- 15: zweiter Führungsabschnitt
- 16: Aufnahmeabschnitt
- 17: mittleres Segment

- 20: Dichtung
- 21: innerer Schenkelabschnitt
- 22: äusserer Schenkelabschnitt
- 23: Basisabschnitt
- 24: zentrales Dichtelement
- 25: inneres Dichtelement
- 26: äusseres Dichtelement
- 27: Beflockung
- 28: Kontaktfläche
- 29: Kontaktfläche
- 30: Kontaktfläche
- 31: Aussparung
- 32: Aussparung
- 33: Haltelippe
- 34: Verstärkungsträger
- 35: Öffnung
- 36: Hohlkammer
- 37: Steg
- 38: Schnittfläche
- 39: Schnittfläche
- 40: Fensterscheibe
- 41: Seitenfläche
- 42: Seitenfläche
- 43: Stirnfläche
- 44: Fensterscheibe

- 50: Tür
- 51: Dichtung
- 52: Zwickel
- 53: Klebeband
- 54: Innenverkleidung

- a: Abstand
- x: horizontale Richtung
- y: vertikale Richtung

## Patentansprüche

1. Dichtungsanordnung zum Abdichten und Führen einer bewegbaren Fensterscheibe (40), insbesondere eines Kraftfahrzeugs, mit
einer Dichtung (20), die einteilig aus einem elastisch verformbaren Werkstoff mit einem annähernd U-förmigen Querschnitt gefertigt ist, und
einer die Fensterscheibe (40) einfassenden Einfassung (10), an der die Dichtung (20) befestigbar ist;
wobei die Einfassung (10) einen inneren Flansch (11), einen von dem inneren Flansch (11) beabstandeten äusseren Flansch (12) und ein mittleres Segment (17) aufweist;
wobei der innere Flansch (11) und der äussere Flansch (12) zumindest einen Schachtabschnitt (13) zum Versenken der Fensterscheibe (40) sowie einen ersten Führungsabschnitt (14) und einen zweiten Führungsabschnitt (15) zum Führen der Fensterscheibe (40) bilden;
wobei die Dichtung (20) einen an dem inneren Flansch (11) befestigbaren inneren Schenkelabschnitt (21), einen an dem äusseren Flansch (12) befestigbaren äusseren Schenkelabschnitt (22) und ausserhalb des Schachtabschnitts (13) einen an dem mittleren Segment (17) angeordneten Basisabschnitt (23) aufweist;
wobei das mittlere Segment (17) zumindest im Bereich des ersten Führungsabschnitts (14) den inneren Flansch (11) und den äusseren Flansch (12) miteinander verbindet und im Bereich des zweiten Führungsabschnitts (15) in einem Abstand (a) von dem inneren Flansch (11) und dem äusseren Flansch (12) angeordnet ist;
wobei der Basisabschnitt (23) im Bereich des zweiten Führungsabschnitts (15) in einem vorgegebenen Abstand (a) von dem inneren Schenkelabschnitt (21) und dem äußeren Schenkelabschnitt (22) angeordnet ist;
wobei der Basisabschnitt (23), der innere Schenkelabschnitt (21) und der äussere Schenkelabschnitt (22) jeweils mit einem die Fensterscheibe (40) abdichtenden und/oder führenden Dichtelement (24, 25, 26) versehen sind;
wobei ein an dem inneren Schenkelabschnitt (21) angeordnetes inneres Dichtelement (25) und ein an dem äusseren Schenkelabschnitt (22) angeordnetes äusseres Dichtelement (26) jeweils als Hohlkammer ausgebildet und mit einer an eine Seitenfläche (41, 42) der Fensterscheibe (40) anlegbaren Kontaktfläche (29, 30) versehen sind und
wobei die Kontaktflächen (29, 30) in zwei senkrecht zueinander verlaufenden Richtungen (x, y) derart ausgestaltet sind, dass die Fensterscheibe (40) reversibel zwischen dem inneren Dichtelement (25) und dem äusseren Dichtelement (26) bewegbar ist.

2. Dichtungsanordnung nach Anspruch 1, **dadurch gekennzeichnet, dass** ein an dem Basisabschnitt (23) angeordnetes zentrales Dichtelement (24) als Hohlkammer ausgebildet und mit einer an einer Stirnfläche (43) der Fensterscheibe (40) anlegbaren Kontaktfläche (28) versehen ist.

3. Dichtungsanordnung nach Anspruch 1 oder 2, **dadurch gekennzeichnet, dass** zumindest eine der Kontaktflächen (28, 29, 30) mit einer reibungsvermindernden Beflockung (27) versehen ist.

4. Dichtungsanordnung nach einem der Ansprüche 1 bis 3, **dadurch gekennzeichnet, dass** der innere Schenkelabschnitt (21) mit einer kanalförmigen Aussparung (31) versehen ist, in die der innere Flansch (11) formschlüssig und/oder kraftschlüssig eingreift.

5. Dichtungsanordnung nach einem der Ansprüche 1 bis 4, **dadurch gekennzeichnet, dass** der äussere Schenkelabschnitt (22) mit einer kanalförmigen Aussparung (32) versehen ist, in die der äussere Flansch (12) formschlüssig und/oder kraftschlüssig eingreift.

6. Dichtungsanordnung nach Anspruch 4 oder 5, **gekennzeichnet durch** Haltelippen (33), die in der Aussparung (31, 32) angeordnet sind.

7. Dichtungsanordnung nach einem der Ansprüche 1 bis 6, **gekennzeichnet durch** einen Verstärkungsträger (34), **durch** den der innere Schenkelabschnitt (21) und/oder der äussere Schenkelabschnitt (22) armiert sind, wobei vorzugsweise der Verstärkungsträger (34) im Querschnitt annähernd U-förmig ausgestaltet, aus einem metallischen Werkstoff gefertigt und mit einer Vielzahl an Öffnungen (35) versehen ist.

8. Dichtungsanordnung nach einem der Ansprüche 1 bis 7, **dadurch gekennzeichnet, dass** die Dichtung (20) aus einem elastomeren Werkstoff, vorzugsweise einem thermoplastischen Elastomer oder Ethylen-Propylen-Dien-Kautschuk, extrudiert ist.

9. Dichtungsanordnung nach Anspruch 7 oder 8, **dadurch gekennzeichnet, dass** der innere Schenkelabschnitt (21) und/oder der äussere Schenkelabschnitt (22) mit einer den Verstärkungsträger (34) zumindest teilweise verdeckenden Hohlkammer (36) versehen sind, wobei vorzugsweise die Hohlkammer (36) durch wenigstens einen Steg (37) in mehrere Bereiche unterteilt ist.

10. Dichtungsanordnung nach einem der Ansprüche 1 bis 9, **dadurch gekennzeichnet, dass** das mittlere Segment (17) den inneren Flansch (11) und den äusseren Flansch (12) im Bereich eines die Oberkante der Fensterscheibe (40) aufnehmenden Aufnahmeabschnitts (16) miteinander verbindet.

11. Dichtungsanordnung nach einem der Ansprüche 1 bis 10, **dadurch gekennzeichnet, dass** das mittlere Segment (17) im Querschnitt annähernd U-förmig ist.

12. Dichtungsanordnung nach einem der Ansprüche 1 bis 11, **dadurch gekennzeichnet, dass** der zwischen dem mittleren Segment (17) und dem inneren Flansch (11) und dem äusseren Flansch (12) im Bereich des zweiten Führungsabschnitts (15) vorhandene Abstand (a) sich entlang des zweiten Führungsabschnitts (15) kontinuierlich vergrössert.

## Claims

1. A sealing arrangement for sealing and guiding a movable window pane, particularly of a motor vehicle, comprising a seal with nearly U-shaped cross-section made integrally of an elastomer and a sash which frames said window pane to which said seal is securable, said sash comprising an inner flange and an outer flange spaced away from said inner flange, and a middle segment whereby the inner and outer flanges form at least one door-cavity section for accommodating said window pane when lowered, and a first guiding portion and a second guiding portion for guiding said window pane, said seal comprising an inner leg portion securable to said inner flange, an outer leg portion securable to said outer flange and, remote from said door-cavity portion, a base portion positioned on the middle segment; said middle segment connecting the inner and outer flanges at least in the area of the first guiding portion and in the area of the second guiding portion being positioned at a distance (a) from the inner and outer flanges; said base portion in the area of the second guiding portion being positioned at a prescribed distance (a) from the inner leg portion and the outer leg portion; said base portion, inner leg portion and the outer leg portion being provided in each case with a seal element which seals and/or guides said window pane, whereby an inner sealing element positioned on the inner leg portion and an outer sealing element positioned on the outer leg portion each has the form of a hollow chamber and has a surface which makes contact with the surface of said window pane, said contact surface areas being configured in two directions (x, y) each perpendicular to the other such that said window pane can be moved in either direction between said inner sealing element and said outer sealing element.

2. The sealing arrangement as set forth in Claim 1, **characterized in that** a central sealing element arranged on said base portion is configured as a hollow chamber and provided with a surface area for contacting an end face of said window pane.

3. The sealing arrangement as set forth in Claim 1 or 2, **characterized in that** at least one of said contact surface areas is provided with a friction-reducing flock coating.

4. The sealing arrangement as set forth in any of Claims 1 to 3, **characterized in that** said inner leg portion is provided with a channel-shaped groove for engaging said inner flange positively and/or non-positively.

5. The sealing arrangement as set forth in any of Claims 1 to 4, **characterized in that** said outer leg portion is provided with a channel-shaped groove for engaging said outer flange positively and/or non-positively.

6. The sealing arrangement as set forth in Claim 4 or 5, **characterized in that** said sealing arrangement comprises retaining lips arranged in said groove.

7. The sealing arrangement as set forth in any of Claims 1 to 6, **characterized in that** said sealing arrangement comprises a bracing element for strengthening said inner leg portion and/or said outer leg portion, preferably said bracing element being made of a metallic material and configured in a roughly U-shaped cross-section and with a plurality of perforations.

8. The sealing arrangement as set forth in any of the Claims 1 to 7, **characterized in that** said seal is extruded from an elastomer, preferably a thermoplastic elastomer or ethylene propylene diene monomer.

9. The sealing arrangement as set forth in Claim 7 or 8, **characterized in that** said inner leg portion and/or said outer leg portion are provided with a hollow chamber covering said bracing element at least in part, said hollow chamber being preferably divided into several portions by at least one web.

10. The sealing arrangement as set forth in any of Claims 1 to 9, **characterized in that** said middle segment connects said inner flange and said outer flange in the region of one of the portions receiving the upper edge of said window pane.

11. The sealing arrangement as set forth in any of Claims 1 to 10, **characterized in that** said middle segment is nearly U-shaped in cross-section.

12. The sealing arrangement as set forth in any of Claims 1 to 11, **characterized in that** said distance (a) between said middle segment and said inner flange and said outer flange in the area of said second guiding portion becomes increasingly greater along this second guiding portion.

## Revendications

1. Agencement d'étanchéité pour étancher et guider une vitre de fenêtre mobile (40), en particulier d'un véhicule automobile, comprenant
un joint d'étanchéité (20) fabriqué d'un seul tenant à partir d'un matériau élastiquement déformable et de section transversale approximativement en forme de U, et
un encadrement (10) encadrant la vitre (40), sur lequel peut être fixé le joint (20) ;
dans lequel
l'encadrement (10) comprend une bride intérieure (11), une bride extérieure (12) espacée de la bride intérieure (11) et un segment central (17) ;
la bride intérieure (11) et la bride extérieure (12) forment au moins une portion de puits (13) pour abaisser la vitre (40) ainsi qu'une première portion de guidage (14) et une seconde portion de guidage (15) pour guider la vitre (40) ;
le joint (20) comprend une portion de branche intérieure (21) susceptible d'être fixée sur la bride intérieure (11), une portion de branche extérieure (22) susceptible d'être fixée sur la bride extérieure (12), et à l'extérieur de la portion de puits (13) une portion de base (23) agencée sur le segment central (17) ;
le segment central (17) relie la bride intérieure (11) et la bride extérieure (12) l'une à l'autre au moins dans la zone de la première portion de guidage (14) et est agencé à une distance (a) de la bride intérieure (11) et de la bride extérieure (12) dans la zone de la seconde portion de guidage (15) ;
la portion de base (23) est agencée à une distance prédéterminée (a) de la portion de branche intérieure (21) et de la portion de branche extérieure (22) dans la zone de la seconde portion de guidage (15) ;
la portion de base (23), la portion de branche intérieure (21) et la portion de branche extérieure (22) sont pourvues chacune d'un élément d'étanchéité (24, 25, 26) étanchant et/ou guidant la vitre (40) ;
un élément d'étanchéité intérieur (25) agencé sur la portion de branche intérieure (21) et un élément d'étanchéité extérieur (26) agencé sur la portion de branche extérieure (22) sont réalisés chacun sous forme de chambre creuse et sont pourvus d'une surface de contact (29, 30) susceptible de s'appliquer contre une surface latérale (41, 42) de la vitre (40) ; et
les surfaces de contact (29, 30) sont réalisées dans deux directions perpendiculaires l'une à l'autre (x, y) de telle sorte que la vitre (40) est mobile de façon réversible entre l'élément d'étanchéité intérieur (25) et l'élément d'étanchéité extérieur (26).

2. Agencement d'étanchéité selon la revendication 1, **caractérisé en ce qu'**un élément d'étanchéité central (24) agencé sur la portion de base (23) est réalisé sous forme de chambre creuse et est pourvu d'une surface de contact (28) susceptible de s'appliquer contre une surface frontale (43) de la vitre (40).

3. Agencement d'étanchéité selon la revendication 1 ou 2, **caractérisé en ce que** l'une au moins des surfaces de contact (28, 29, 30) est pourvue d'un flocage (27) réduisant la friction.

4. Agencement d'étanchéité selon l'une des revendications 1 à 3, **caractérisé en ce que** la portion de branche intérieure (21) est pourvue d'une échancrure en forme de canal (31) dans laquelle vient s'engager la bride intérieure (11) par coopération de formes et/ou par coopération de forces.

5. Agencement d'étanchéité selon l'une des revendications 1 à 4, **caractérisé en ce que** la portion de branche extérieure (22) est pourvue d'une échancrure en forme de canal (32) dans laquelle vient s'engager la bride extérieure (12) par coopération de formes et/ou par coopération de forces.

6. Agencement d'étanchéité selon la revendication 4 ou 5, **caractérisé par** des lèvres de retenue (33) qui sont agencées dans l'échancrure (31,32).

7. Agencement d'étanchéité selon l'une des revendications 1 à 6, **caractérisé par** un support de renforcement (34) qui arme la portion de branche intérieure (21) et/ou la portion de branche extérieure (22), le support de renforcement (34) étant réalisé de préférence avec une section transversale approximativement en forme de U, fabriqué d'un matériau métallique et pourvu d'une multitude d'ouvertures (35).

8. Agencement d'étanchéité selon l'une des revendications 1 à 7, **caractérisé en ce que** le joint (20) est extrudé d'une matière élastomère, de préférence d'un élastomère thermoplastique ou de caoutchouc éthylène propylène diène.

9. Agencement d'étanchéité selon la revendication 7 ou 8, **caractérisé en ce que** la portion de branche intérieure (21) et/ou la portion de branche extérieure (22) sont pourvues d'une chambre creuse (36) recouvrant au moins partiellement le support de renforcement (34), la chambre creuse (36) étant de préférence subdivisée en plusieurs zones par au moins une barrette (37).

10. Agencement d'étanchéité selon l'une des revendications 1 à 9, **caractérisé en ce que** le segment central (17) relie la bride intérieure (11) et la bride extérieure (12) dans la zone d'une portion de logement (16) recevant l'arête supérieure de la vitre (40).

11. Agencement d'étanchéité selon l'une des revendications 1 à 10, **caractérisé en ce que** le segment central (17) présente une section transversale approximativement en forme de U.

12. Agencement d'étanchéité selon l'une des revendications 1 à 11, **caractérisé en ce que** la distance (a) existant entre le segment central (17) et la bride intérieure (11) et la bride extérieure (12) dans la zone de la seconde portion de guidage (15) s'agrandit en continu le long de la seconde portion de guidage (15).
